# EUROPÄISCHE PATENTSCHRIFT

(11) **EP 1 171 326 B1**
(45) Veröffentlichungstag und Bekanntmachung des Hinweises auf die Patenterteilung: **30.06.2004**
(21) Anmeldenummer: 00926848.3
(22) Anmeldetag: 10.04.2000
(51) Int. Cl.: B60R 19/20, B60R 21/34

(54) **SICHERHEITSSTOSSFÄNGER MIT DURCH EINEM AUFPRALLSENSOR STEUERBAREM, ENERGIEAUFNEHMENDEM ELEMENT**
SAFETY BUMPER COMPRISING AN ENERGY-ABSORBING ELEMENT CONTROLLED BY AN IMPACT SENSOR
PARE-CHOCS DE SECURITE POURVU D'UN ELEMENT ABSORBANT L'ENERGIE COMMANDE PAR UN CAPTEUR D'IMPACT

(30) Priorität: 22.04.1999 DE 19918202
(43) Veröffentlichungstag der Anmeldung: 16.01.2002
(73) Patentinhaber: Bayer Aktiengesellschaft, 51368 Leverkusen (DE)
(72) Erfinder: ZÖLLNER, Olaf, D-51061 Köln (DE); LANG, Andreas, D-58513 Lüdenscheid (DE); BREDEMANN, Thorsten, D-50737 Köln (DE)
(86) Internationale Anmeldenummer: PCT/EP2000/003159
(87) Internationale Veröffentlichungsnummer: WO 2000/064707

(56) Entgegenhaltungen:
- DE-A- 2 455 258
- DE-A- 4 308 021
- FR-A- 2 474 982
- GB-A- 2 311 966
- GB-A- 2 336 572
- PATENT ABSTRACTS OF JAPAN vol. 014, no. 384 (M-1013), 20. August 1990 (1990-08-20) & JP 02 144246 A (MAZDA MOTOR CORP;OTHERS: 01), 4. Juni 1990 (1990-06-04)

## Beschreibung

Die Erfindung betrifft ein Sicherheitsstoßfängersystem für Kraftfahrzeuge, insbesondere Personenkraftwagen und Lastkraftwagen, das konstruktiv so gestaltet ist, daß es die Anforderungen der derzeitigen Fußgängerschutzprüfung, z.B. nach den Bestimmungen der EEVC erfüllt, gleichzeitig aber äußere Gestaltungsmöglichkeiten wie bei konventionellen Stoßfängersystemen zuläßt.

Bekannte Stoßfängersysteme von PKWs und LKWs versuchen verschiedenen Anforderungen hinsichtlich der Energieaufnahme bei Unfällen sowohl bei niedrigen als auch bei höheren Geschwindigkeiten gerecht zu werden, wobei trotzdem ein Gestaltungsspielraum für das Design erhalten bleiben soll. Der aus der EP 768 213 A2 bekannte Stoßfänger für den Front- oder Heckbereich eines PKWs weist einen Stoßdämpfer als energieaufnehmendes Element auf, das über eine einfach montierbare Befestigung mit dem eigentlichen Stoßfänger und einer darauf angebrachten Verkleidung verbunden ist.

Aus der EP 839 690 A2 ist ein Stoßfängersystem für LKWs bekannt, das im wesentlichen aus kombinierten U-Profilstreifen aufgebaut ist, die besondere Verstärkungselemente aufweisen. Dieses Stoßfängersystem dient einerseits zur Aufnahme von Energie beim Aufprall auf andere Kraftfahrzeuge. Andererseits wird mit der Montage unterhalb eines bestehenden Stoßfängers ein Unterfahrschutz erreicht.

In der EP 736 420 A2 ist ein Stoßfängersystem für einen PKW beschrieben, das einen Stoßfänger aufweist, der im wesentlichen aus einem energieabsorbierenden Puffer besteht, der von einer flexiblen Hülle umgeben ist und der sich im Falle eines Aufpralls verformt und dabei die Bewegungsenergie aufnimmt.

Alle bekannten Stoßfängersysteme sind allerdings nicht in der Lage die modernen Anforderungen an einen Fußgängerschutz bei einem Unfall unter Beteiligung von Fußgängern zu erfüllen.

Insbesondere wird von den Stoßfängersysteme verlangt, daß sie den Anforderungen z.B. der EEVC (European Enhanced Vehicle Savety Commitee) Verordnung genügen. Diese besagt unter anderem, daß der Aufprall eines Legform-Impactors - der die menschliche Beinform nachstellt - mit einer Masse von 13,6 kg und einer Geschwindigkeit von 40 km/h auf die Frontpartie des Kraftfahrzeugs getestet werden soll. Die beim Test auftretende Beschleunigung soll nicht größer als 150 g sein. Der Knickwinkel des Impactors darf bei dem Test 15° nicht überschreiten und der Scherweg der Impactorteile soll nicht größer als 6 mm sein.

Wünschenswert ist ferner, daß das Stoßfängersystem außer den Fußgängerschutzbedingungen auch die Anforderungen hinsichtlich des 4km/h-Aufpralltests und des 8 km/h-Aufpralltests erfüllt.

Weiterhin besteht die Notwendigkeit die Designfreiheit durch die Erfüllung der EEVC-Anforderungen möglichst nur gering einzuschränken. Das Gesamtbild des KFZ soll nicht oder nur minimal durch die Schutzmaßnahmen beeinflußt werden.

Aus DE 43 08 021 A ist ein Lastkraftwagen bekannt, welcher an seiner Frontpartie einen Aufprallschutz in Form eines elastisch nachgiebigen Schutzkörpers aufweist. Der energieabsorbierende Schutzkörper, z.B. in Form von aufgeblasenen Luftschläuchen, kann zumindest teilweise die Frontpartie des LKWs bilden und hat seine endgültige Kontur bereits beim normalen Fahrbetrieb.

Es wurde gefunden, daß die nachfolgend beschriebenen neuen Stoßfängersysteme sowohl den 4km/h-Test (gegebenenfalls auch den 8 km/h-Test) und auch die vorgenannten Fußgängerschutzbedingungen erfüllen. Darüber hinaus ermöglicht die Erfindung, daß die Designfreiheit zur Gestaltung der Front- oder Rückseite der Kraftfahrzeuge weitgehend erhalten bleibt.

Gegenstand der Erfindung ist ein Sicherheitsstoßfänger für ein Kraftfahrzeug, insbesondere für einen Personenkraftwagen, wenigstens ausgestattet mit einem Stoßfängergrundkörper mit Stoßleiste, der über eine Halterung, insbesondere durch ein Energieaufnahmemodul als Halterung, mit einem Querträger am Fahrzeug verbunden ist, dadurch gekennzeichnet, daß oberhalb der Halterung energieaufnehmende Elemente und/oder unterhalb der Halterung energieaufnehmende Elemente angebracht sind, die durch einen Aufprallsensor steuerbar sind, und nach Ansteuerung durch den Aufprallsensor jeweils oberhalb bzw. unterhalb des Stoßfängergrundkörpers mit der Vorderseite des Stoßfängergrundkörpers eine durchgehende Kontur bilden, so daß bei einer durch einen Aufprall ausgelösten Betätigung der energieaufnehmenden Elemente diese mit der Vorderseite des Stoßfängergrundkörpers (4) eine gemeinsame Front bilden.

Durchgehende Kontur bedeutet hier, daß bei einer durch einen Aufprall ausgelösten Betätigung der energieaufnehmenden Elemente diese mit der Vorderseite des Stoßfängergrundkörpers eine gemeinsame Front bilden, die den Knickwinkel - bezogen auf den Aufprall eines genormten Beinimpaktors - erniedrigen und z.B. kleiner als 15° halten. Hiermit wird den Bestimmungen der eingangs genannten Richtlinie des EEVC entsprochen.

In einer bevorzugten Ausführung ist das oberhalb der Halterung angeordnete energieaufnehmende Element ein Airbag, der zusammengefaltet, bevorzugt unter einer Klappe, auf oder hinter der Halterung angebracht und dessen Zünder über die Steuerleitung mit dem Aufprallsensor elektrisch verbunden ist.

In einer bevorzugten Variante ist das oberhalb der Halterung angeordnete energieaufnehmende Element ein Airbag, der zusammengefaltet, bevorzugt unter einer beweglichen oberen Klappe, auf oder hinter der Halterung angebracht und dessen Zünder über die Steuerleitung mit dem Aufprallsensor elektrisch verbunden ist und der zusammen mit der geöffneten oberen Klappe nach Ansteuerung durch den Aufprallsensor mit der Vorderseite des Stoßfängergrundkörpers eine durchgehende Kontur bildet.

Eine weitere besonders Variante des Stoßfängers ist dadurch gekennzeichnet, daß das oberhalb der Halterung angeordnete energieaufnehmende Element eine Kombination aus einer oberen Stoßfängerklappe, einer darunter befindlichen Schieberplatte und einem Hubsystem mit Antrieb ist, wobei der Antrieb über die Steuerleitung mit dem Aufprallsensor elektrisch verbunden ist, und wobei nach Ansteuerung des Antriebs durch den Aufprallsensor die ausgefahrene obere Stoßfängerklappe und die ausgefahrene Schieberplatte mit der Vorderseite des Stoßfängergrundkörpers eine durchgehende Kontur bilden.

In einer bevorzugten Ausführung der Erfindung ist das unterhalb der Halterung angeordnete energieaufnehmende Element ein Airbag, der zusammengefaltet, bevorzugt unter dem untersten Teil des Stoßfängers, angebracht und dessen Zünder über die Steuerleitung mit dem Aufprallsensor elektrisch verbunden ist.

Eine weitere bevorzugte Variante des Stoßfängers ist dadurch gekennzeichnet, daß unterhalb der Halterung angeordnete energieaufnehmende Element ein Airbag ist, der zusammengefaltet, unter einer beweglichen unteren Klappe, angebracht und dessen Zünder über die Steuerleitung mit dem Aufprallsensor elektrisch verbunden ist und der zusammen mit der geöffneten Klappe nach Ansteuerung durch den Aufprallsensor mit der Vorderseite des Stoßfängergrundkörpers eine durchgehende Kontur bildet.

In einer anderen besonderen Ausführungsform ist das unterhalb der Halterung angeordnete energieaufnehmende Element eine Kombination aus einer unteren Stoßfängerklappe, einer darunter befindlichen unteren Schieberplatte und einem unteren Hubsystem mit Antrieb, wobei der Antrieb über die Steuerleitung mit dem Aufprallsensor elektrisch verbunden ist, und wobei nach Ansteuerung des Antriebs durch den Aufprallsensor die ausgefahrene untere Stoßfängerklappe und die ausgefahrene unteren Schieberplatte mit der Vorderseite des Stoßfängergrundkörpers eine durchgehende Kontur bilden.

Der Antrieb für das untere bzw. für das obere Hubsystem ist unabhängig voneinander insbesondere ein Gasdruckzylinder oder ein Hydraulikzylinder.

Anstelle des oberen oder des unteren Hubsystems kann auch ein Airbagsystem zum Bewegen der oberen oder unteren Stoßfängerklappe vorgesehen werden.

Die genannten Klappen, die obere Klappe, die obere Stoßfängerklappe, die untere Stoßfängerklappe oder die untere Klappe, welche die energieaufnehmenden Elemente optisch verbergen und bei Betätigung des Sensors aufklappen, sind unabhängig voneinander über ein flexibles Kunststoffteil, insbesondere aus dem Material TPE oder TPU mit dem Stoßfängergrundkörper beweglich verbunden sind. Es können auch gewöhnliche Scharniere zum Einsatz kommen.

Die Halterung des Stoßfängers ist vorzugsweise ein energieaufnehmender Kunststoffschaumkörper oder Kunststoffstrebenkörper.

Der energieaufnehmende Kunststoffschaumkörper besteht besonders bevorzugt aus Polyurethanschaum oder thermoplastischem Schaumstoff, z.B. Polystyrolschaum oder Polypropylenschaum.

Besondere Vorteile hinsichtlich der Energieaufnahme beim Aufprall ergeben sich, wenn die oberhalb der Halterung befindlichen energieaufnehmende Elemente und/oder die unterhalb der Halterung energieaufnehmende Elemente über eine zusätzliche Abstützstrebe mit dem Frontend des Kraftfahrzeugs verbunden sind.

Die wesentlichen Merkmale der vorliegenden Erfindung sind: Das klassische Stoßfängersystem wird in der Art erweitert, daß sowohl die Designfreiheit belassen als auch die Anforderungen des Fußgängerschutzes erfüllt werden.

Der beschriebene Sicherheitsstoßfänger wirkt grundsätzlich wie folgt: Zur Energieaufnahme dient die Außenhaut des Stoßfängersystems aus Kunststoff in Verbindung mit konstruktiv gestalteter Halterung aus Kunststoff oder Metall. Dies kann ein Schaumsystem oder ein Kunststoff- oder Metallstrebenkörper oder Kombination aus diesen sein. Dieses System soll die Anforderungen an die maximale Beschleunigungswerte erfüllen.

Zur Erfüllung der weiteren Anforderungen des Fußgängerschutzes (Knickwinkel z.B. kleiner 15° und Scherweg z.B. kleiner 6mm), wird z.B. oberhalb und/oder unterhalb der Halterung ein ausklappbares Ober- und Unterteil in der äußeren Kunststoffschale vorgesehen.

Dieser Klappmechanismus kann durch eine "Hart-Weich-Kombination" von geeigneten Kunststoffen oder durch die konstruktiven und /oder materialtechnischen Möglichkeiten der äußeren Kunststoffschale allein realisiert (Scharnierfunktion) werden.

Das Ausklappen der Ober- und Unterteile erfolgt beispielsweise über grundsätzlich bekannte Airbag-Systeme, mechanische Hebevorrichtungen oder Druckzylinder, die durch Drucksensoren und/oder berührungslose Sensoren (Radar, Ultraschall, Laser o.ä.) ausgelöst werden. Diese Sensoren sollten insbesondere geschwindigkeitsabhängig gesteuert werden. Von 0 km/h bis ca. 4 km/h Fahrzeuggeschwindigkeit sprechen die Sensoren beispielsweise nicht an. Dies dient zum Schutz vor Mißbrauch der Airbagsysteme oder vor Bagatellschäden.

Der Klappmechanismus kann so gestaltet werden, daß die beteiligten Teile (Klappen) reversibel mehrmals geöffnet und geschlossen werden können.

Materialien die für die äußere Stoßfängerschale (Vorderseite) in Frage kommen, sind Kunststoffe, die eine möglichst geringe Wanddicke bei gleichzeitiger Beibehaltung der mechanischen Eigenschaften über einen weiten Temperaturbereich zulassen. Für die weichere Komponente der aufklappbaren oberen und unteren Klappmechanismen empfehlen sich TPU (thermoplatisches Polyurethan) oder TPE (thermoplastisches Elastomer).

Zur Erfüllung der Fußgängerschutzanforderungen können zur Abstützung und zur Versteifung neben dem bereits vorhandenen Querträger zusätzliche Strukturbauteile vorgesehen werden. Diese zusätzlichen Strukturbauteile werden bevorzugt über Kunststoff-Metall-Verbundteile (z.B. aus Polyamid + Metallblech) realisiert. Bei Überlastung sorgen eingebaute Soll-Knickstellen vor Crashschäden.

Die Erfindung wird nachstehend anhand der Figuren näher erläutert.

Es zeigen:
- Fig.1a: den Querschnitt durch eine Ausführungsform eines erfindungsgemäßen Sicherheitsstoßfängers
- Fig.1b: den Querschnitt durch den Sicherheitsstoßfänger nach Fig.1a nach einem Aufprall
- Fig.2a: den Querschnitt durch eine weitere Ausführungsform eines erfindungsgemäßen Sicherheitsstoßfängers mit Schieberplatten
- Fig.2b: den Querschnitt durch den Sicherheitsstoßfänger nach Fig.2a nach einem Aufprall
- Fig.3a: den Querschnitt durch eine weitere Ausführungsform eines erfindungsgemäßen Sicherheitsstoßfängers mit zwei Airbags
- Fig.3b: den Querschnitt durch den Sicherheitsstoßfänger nach Fig.3a nach einem Aufprall

### Beispiele

Drei Beispiele zeigen verschiedene Ausführungsformen der Erfindung.

### Beispiel 1

### Stoßfängersystem

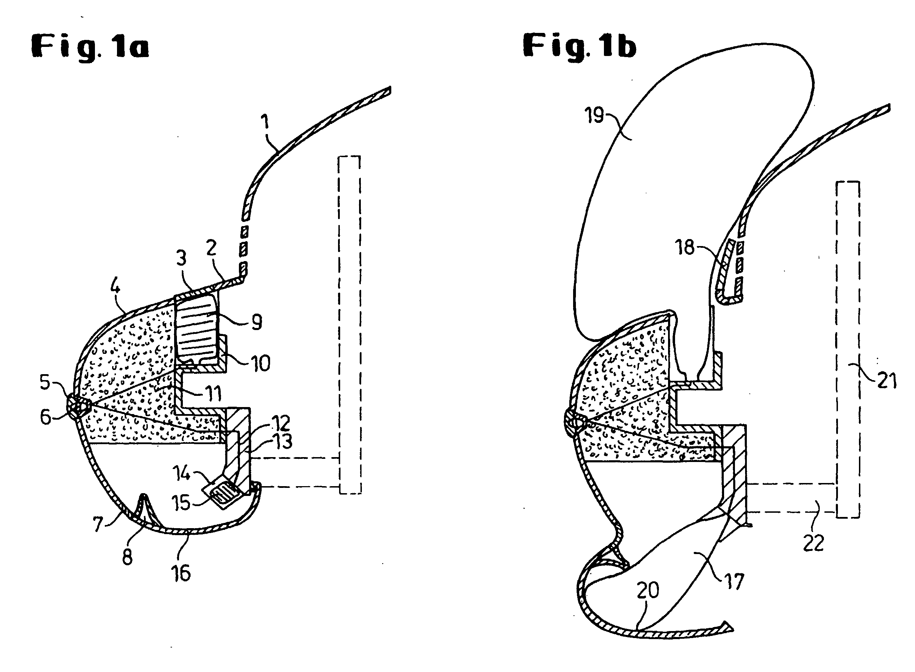

In den Figuren 1a und 1b ist jeweils ein Querschnitt durch einen Sicherheitsstoßfänger wiedergegeben. Unterhalb der Motorhaube 1 eines PKWs ist ein Teil der äußeren Begrenzung des Stoßfängers über ein.Scharnier 2 mit der Klappe 3 verbunden. Das Scharnier 2 ermöglicht das Aufklappen der Klappe 3 in Richtung der Motorhaube 1. Wahlweise ist anstelle des Scharniers ein Verbindungsstück 2 aus elastischem Material vorgesehen, z.B. einer Zwei-Komponenten-Verbindung (ein thermoplastisches Polyurethan: TPU). Unter der Klappe 3 ist ein zusammengefallteter Airbag 9 angebracht. Der Stoßfängergrundkörper (Stoßfängeraußenschale) 4 und die Stoßleiste 5 umgeben das Energieaufnahmemodul (Halterung) 11, ein Polyurethanschaumkissen, und einen darunter befindlichen Hohlraum, in dem ein weiterer Airbagkasten 14 mit Airbag 15 untergebracht ist.

Die Klappe 3, der Stoßfängergrundkörper 4 und die Stoßleiste 5 sind aus einem Kunststoffwerkstoff (Polycarbonat-Polybutylenterephthalat-Mischung; PC/PBT) oder einer Polyolformulierung hergestellt. Hinter der Stoßleiste 5 befindet sich ein Sensor 6, der über ein elektronisches Signal durch die Leitung 12 die Zündung der Airbags 9 und 15 im Falle einer Kollision mit dem Stoßfänger auslöst (die Zünder der Airbags 9 und 15 sind hier nicht gezeichnet). Unterhalb des Sensors 6 befindet sich eine weitere Klappe 16, die ebenfalls die obere Klappe über ein zweites Scharnier 7 mit dem Grundkörper 4 verbunden ist und die sich nach unten öffnen kann.

Auch bei der Klappe 16 wird das Aufklappen über einen Airbag 15 ausgelöst. Der entfaltete Airbag 17 übernimmt zusammen mit der Klappe 16 (20 in Fig. 1b) und mit den Bauteilen 13 und gegebenenfalls 22 die Energieabsorption im unteren Bereich des Stoßfängers und reduziert den Knickwinkel und den Scherweg der Front des PKWs.

Der Airbag 15 wird abgestützt über ein Kunststoff-Metall-Verbundbauteil 13 und 14 (aus Polyamid / Stahlblech), das wiederum im Querträger 10 oder am Frontend 21 des Wagens integriert ist.

Die Energieabsorbtion im Mittelteil erfolgt über ein System aus dem Grundkörper 4 und dem energieabsorbierenden Schaumkissen (EA-Schaum) 11.

Der entfaltete Airbag 19 sorgt bei einem Unfall für die Energieabsorbtion im Bereich oberhalb des Stoßfängers und verkleinert erheblich den Knickwinkel.

Durch den Klappmechanismus im Unterteil und durch den Airbag 19, 17 wird der Knickwinkel unter 15° und der Scherweg kleiner als 6 mm gehalten (siehe Fig. 1b).

Es kann zur zusätzlichen Abstützung des Airbags 15 und Übertragung von Aufprallenergie ein weiterer Verbindungsträger 22 vom Airbag 15 zum Frontend 21 des Wagens eingebaut werden.

Ein Überlastungsschutz im Verbindungsträger 22 schützt im Crashfall vor Zerstörung oder Schädigung von Anbauteilen. Eine Knickstelle kann als Sicke in der Konstruktion vorgesehen sein. Eine weitere Möglichkeit ist die Reduzierung des Trägerquerschnitts durch Durchbrüche oer Wanddickenreduzierung.

### Beispiel 2

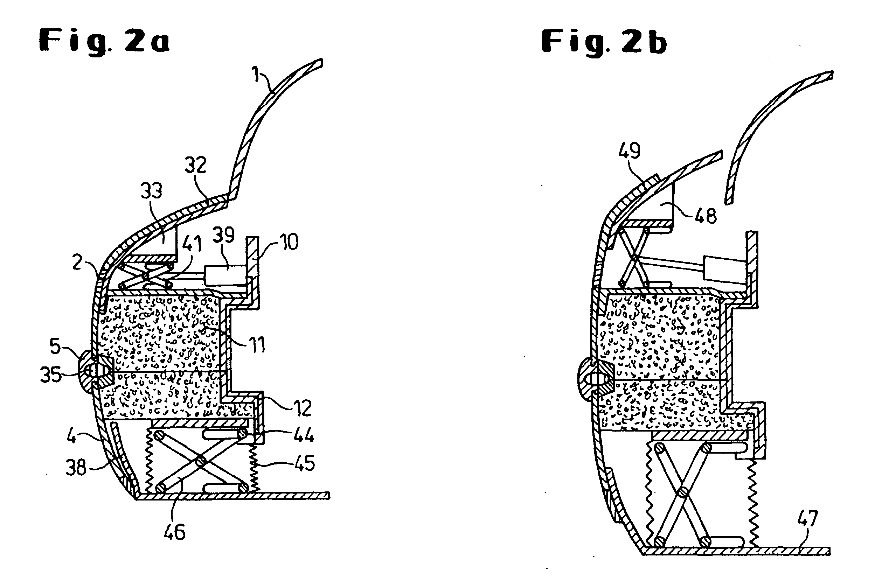

Die Figuren 2a und 2b zeigen jeweils einen Querschnitt durch einen alternativen Sicherheitsstoßfänger. Figur 2a zeigt ein Stoßfängersystem, bei dem während einer Kollision über ein oberes und unteres Hubsystem 41 bzw. 46 eine obere Klappe 32 und eine untere Klappe 38 nach oben (Klappe 49) bzw. nach unten (Klappe 47) geschoben wird.

Oberhalb des Energieabsorbers 11 ist eine Hubvorrichtung 41 angebracht die die obere Schiebeplatte 33 trägt. Die obere Schiebeplatte 33 befindet sich unter der Klappe 32, die über das elastische Scharnier 2 mit dem Stoßfangergrundkörper 4 beweglich verbunden ist und an ihrem oberen Ende an die Motorhaube 1 anstößt.

Auf dem StoßFängergrundkörper 4 befindet sich die Stoßleiste 5 mit dem Aufprallsensor 35. Unterhalb des Energieabsorbers (Halterung) 11 ist eine untere Hubvorrichtung 46 angebracht, die die untere Schiebeplatte 47 trägt. Der Sensor 5 ist über die elektrischen Sensorleitungen 12 mit einem oberen und einem unteren Gasdruckzylinder 39 bzw. 44 verbunden, die die Bewegung der Hubvorrichtungen 41 und 46 bewirken.

Ausgelöst wird die Verschiebung der Klappen 32 und 38 durch den Sensor 35 in der Stoßleiste 5 ähnlich wie bei der Auslösung der Airbagzündung in dem Stoßfängersystem nach Beispiel 1.

Über die Sensorleitungen 12 wird das Auslösesignal zu beweglichen Druckzylindern 39 bzw. 44 geführt. Diese übernehmen die schnelle Bewegung der Hubsysteme 41 bzw. 46. Statt der Hubsysteme 41 bzw. 46 können auch senkrecht eingebaute Druckzylinder (nicht gezeichnet) verwendet werden. Eine weitere Möglichkeit ist die Verschiebung der Schiebeplatten 33 und 38 durch sich ausdehnende Airbags (nicht gezeichnet).

Die Energieabsorbtion im Mittelteil des Stoßfängers erfolgt wie im Beispiel 1.

Durch das Ausfahren der Unterklappe 32 und der Oberklappe 38 wird der Knickwinkel für einen aufprallenden Körper unter 15° und der Scherweg kleiner als 6 mm gehalten (siehe Fig. 2b).

Die Werkstoffe des Stoßfängergrundkörpers 4 und der Klappen 32 und 38 entsprechen den in Beispiel 1 genannten (PC/PBT-Mischung und Polyolformulierung). Das Scharnier 2 besteht aus TPU.

### Beispiel 3

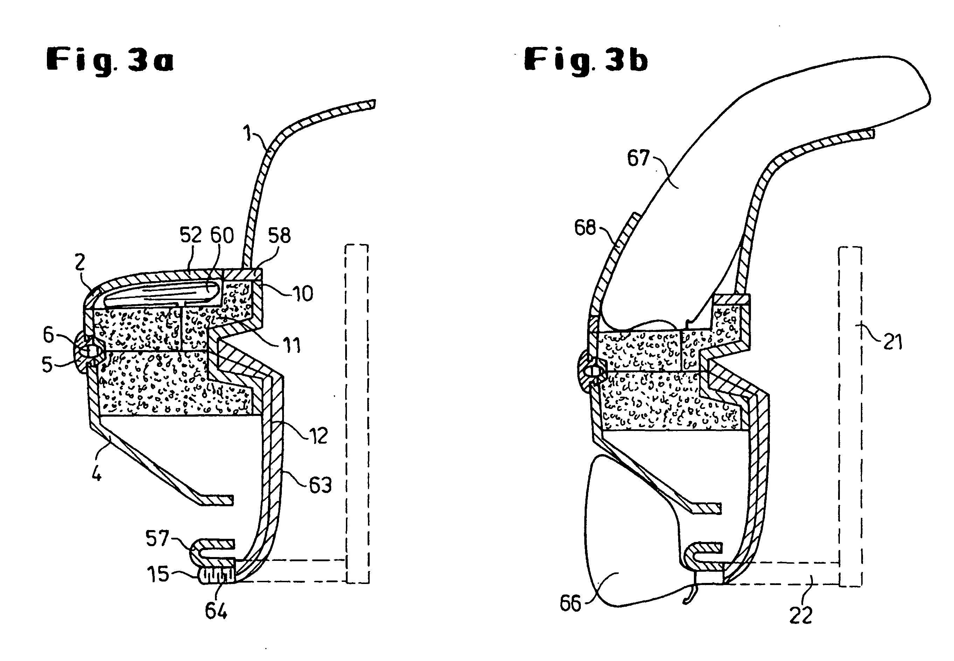

Die Figuren 3a und 3b zeigen jeweils im Querschnitt eine weitere Variante des Sicherheitsstoßfängers. Figur 3a zeigt ein Stoßfängersystem, bei dem während einer Kollision über ein oberes und unteres Airbagsystem 60 bzw. 64 eine obere Klappe 68 (52) geöffnet und eine einheitliche Aufprallfront gebildet wird.

Oberhalb des Energieabsorbers 11 ist ein oberes Airbagsystem 60 angebracht, der unter der oberen Klappe 68 sitzt. Die obere Klappe 68 ist über das elastische Scharnier 2 (aus TPU) mit dem Stoßfängergrundkörper 4 (aus PC/PBT-Mischung) beweglich verbunden und grenzt an ihrem oberen Ende an die Zierleiste 58 unter der Motorhaube 1 an.

Auf dem Stoßfängergrundkörper 4 befindet sich die Stoßleiste 5 mit dem Aufprallsensor 6. Unterhalb des Energieabsorbers 11 ist eine untere Airbagvorrichtung 64 angebracht, die unter dem unteren zurückspringenden Teil des Stoßfängergrundkörpers 4 angeordnet ist. Der Sensor 5 ist über die elektrischen Sensorleitungen 12 mit dem oberen Airbagsystem 60 und dem unteren Airbagsystem 64 verbunden. Das untere Airbagsystem 64 ist auf dem unteren Ende eines Trägers 63 montiert, der den gesamten Stoßfänger und den unteren äußerlich sichtbaren Teil 57 des Stoßfängers trägt. Über dem Teil 57 befindet sich eine Lufteinlaßöffnung.

Es kann zur zusätzlichen Abstützung des Airbags 66 und Übertragung von Aufprallenergie ein weiterer Verbindungsträger 22 vom Airbag 66 zum Frontende 21 des Wagens eingebaut werden.

Die Zündung der Zünder des oberen Airbagsystems 60 und des unteren Airbagsystems 64 wird durch den Sensor 6 in der Stoßleiste 5 ausgelöst, ähnlich wie bei der Auslösung der Airbagzündung in dem Stoßfängersystem nach Beispiel 1.

Über die Sensorleitungen 12 wird das Auslösesignal zu den Airbagsystemen 60 und 64 geführt.

Die Energieabsorbtion im Mittelteil des Stoßfängers erfolgt wie im Beispiel 1 dargestellt.

Durch die Ausdehnung des oberen Airbags 67 wird die Klappe 52 geöffnet - vergleichbar mit der Öffnung der oberen Klappe in Beispiel 1.

Im Unterteil füllt der ausgedehnte Airbag 66 die Stoßfängerkontur in der Art aus, daß eine einheidiche knicklose Front entsteht. Hierdurch und durch den oberen Airbag 67 in Verbindung mit der Klappe 52 wird der Knickwinkel der ganzen Aufprallfront unter 15° und der Scherweg kleiner als 6 mm gehalten (siehe Fig. 3b).

Die Abstützung des unteren Airbags 66 erfolgt vergleichbar wie in Beispiel 1 über eine Kunststoff-Metall-Verbundstruktur (Polyamid/Stahlblech) angebunden am Querträger 10 oder am Frontend 21.

Ein Überlastungsschutz im gegebenenfalls zusätzlich angebrachten Verbindungsträger 22 schützt im Crashfall vor Zerstörung oder Schädigung von Anbauteilen.

## Patentansprüche

1. Sicherheitsstoßfänger für ein Kraftfahrzeug, insbesondere für einen Personenkraftwagen, wenigstens mit einem Stoßfängergrundkörper (4) mit Stoßleiste (5), der über eine Halterung (11), insbesondere durch ein Energieaufnahmemodul (11), mit einem Querträger (10) am Fahrzeug verbunden ist, **dadurch gekennzeichnet dass** oberhalb der Halterung (11) energieaufnehmende Elemente (9; 32, 33, 39, 41; 52, 60) und/oder unterhalb der Halterung (11) energieaufnehmende Elemente (17, 20; 38, 46; 64) angebracht sind, die durch einen Aufprallsensor (6) steuerbar sind, und nach Ansteuerung durch den Aufprallsensor (6) jeweils oberhalb bzw. unterhalb des Stoßfängergrundkörpers (4) mit der Vorderseite des Stoßfängergrundkörpers (4) eine durchgehende Kontur bilden, so dass bei einer durch einen Aufprall ausgelösten Betätigung der energieaufnehmenden Elemente diese mit der Vorderseite des Stoßfängergrundkörpers (4) eine gemeinsame Front bilden.

2. Sicherheitsstoßfänger nach Anspruch 1, **dadurch gekennzeichnet, daß** das oberhalb der Halterung (11) angeordnete energieaufnehmende Element ein Airbag (9) ist, der zusammengefaltet, bevorzugt unter einer Klappe (3), auf oder hinter der Halterung (11) angebracht und dessen Zünder über die Steuerleitung (12) mit dem Aufprallsensor (6) elektrisch verbunden ist.

3. Sicherheitsstoßfänger nach Anspruch 1, **dadurch gekennzeichnet, daß** das oberhalb der Halterung (11) angeordnete energieaufnehmende Element ein Airbag (9) ist, der zusammengefaltet, bevorzugt unter einer beweglichen oberen Klappe (52), auf oder hinter der Halterung (11) angebracht und dessen Zünder über die Steuerleitung (12) mit dem Aufprallsensor (6) elektrisch verbunden ist und der zusammen mit der geöffneten oberen Klappe (52, 68) nach Ansteuerung durch den Aufprallsensor. (6) mit der Vorderseite des Stoßfängergrundkörpers (4) eine durchgehende Kontur bildet.

4. Sicherheitsstoßfänger nach Anspruch 1, **dadurch gekennzeichnet, daß** das oberhalb der Halterung (11) angeordnete energieaufnehmende Element eine Kombination aus einer oberen Stoßfängerklappe (32), einer darunter befindlichen Schieberplatte (33) und einem Hubsystem (41) mit Antrieb (39) ist, wobei der Antrieb (39) über die Steuerleitung (12) mit dem Aufprallsensor (6) elektrisch verbunden ist, und wobei nach Ansteuerung des Antriebs (39) durch den Aufprallsensor (6) die ausgefahrene obere Stoßfängerklappe (49) und die ausgefahrene Schieberplatte (48) mit der Vorderseite des Stoßfängergrundkörpers (4) eine durchgehende Kontur bilden.

5. Sicherheitsstoßfänger nach einem der Ansprüche 1 bis 4, **dadurch gekennzeichnet, daß** das unterhalb der Halterung (11) angeordnete energieaufnehmende Element ein Airbag (64) ist, der zusammengefaltet, bevorzugt unter dem untersten Teil (57) des Stoßfängers, angebracht und dessen Zünder über die Steuerleitung (12) mit dem Aufprallsensor (6) elektrisch verbunden ist.

6. Sicherheitsstoßfänger nach den Ansprüchen 1 bis 4, **dadurch gekennzeichnet, daß** unterhalb der Halterung (11) angeordnete energieaufnehmende Element ein Airbag (15) ist, der zusammengefaltet, unter einer beweglichen unteren Klappe (16), angebracht und dessen Zünder über die Steuerleitung (12) mit dem Aufprallsensor (6) elektrisch verbunden ist und der zusammen mit der geöffneten Klappe (20) nach Ansteuerung durch den Aufprallsensor (6) mit der Vorderseite des Stoßfängergrundkörpers (4) eine durchgehende Kontur bildet.

7. Sicherheitsstoßfänger nach den Ansprüchen 1 bis 4, **dadurch gekennzeichnet, daß** das unterhalb der Halteruno (11) angeordnete energieaufnehmende Elcment eine Kombination aus dem Stoßfängergrundkörper (4), einer darunter befindlichen unteren Schieberplatte (38) und einem unteren Hubsystem (46) mit Antrieb (44) ist, wobei der Antrieb (44) über die Steuerleitung (12) mit dem Aufprallsensor (6) elektrisch verbunden ist, und wobei nach Ansteuerung des Antriebs (44) durch den Aufprallsensor (6) die ausgefahrene untere Schieberplatte (38) mit dem Stoßfängergrundkörper (4) eine durchgehende Kontur bildet.

8. Sicherheitsstoßfänger nach Anspruch 4 oder 7, **dadurch gekennzeichnet, daß** der Antrieb (44) oder (39) für das untere bzw. obere Hubsystem (41) bzw. (46) unabhängig von einander ein Gasdruckzylinder oder ein Hydraulikzylinder ist.

9. Sicherheitsstoßfänger nach einem der Ansprüche 2, 3, 4, 6, 7 oder 8, **dadurch gekennzeichnet, daß** die Klappe (3), die obere Klappe (52), die obere Stoßfängerklappe (32) oder die untere Klappe (16) unabhängig voneinander über ein flexibles Kunststoffteil (2), insbesondere aus TPE oder TPU mit dem Stoßfängergrundkörper (4) beweglich verbunden sind.

10. Sicherheitsstoßfänger nach einem der Ansprüche 1 bis 9, **dadurch gekennzeichnet, daß** die Halterung (11) ein energieaufnehmender Kunststoffschaumkörper oder Kunststoffstrebenkörper ist.

11. Sicherheitsstoßfänger nach Anspruch 10, **dadurch gekennzeichnet, daß** der energieaufnehmende Kunststoffschaumkörper aus Polyurethanschaum oder thermoplastischem Schaumstoff, z.B. Polystyrolschaum oder Polypropylenschaum besteht.

12. Sicherheitsstoßfänger nach einem der Ansprüche 1 bis 11, **dadurch gekennzeichnet, daß** die oberhalb der Halterung (11) angeordneten energieaufnehmenden Elemente (9; 32, 33, 39, 41; 52. 60) und/oder die unterhalb der Haltcrung (11) energieaufnehmenden Elemente (17, 20; 38, 46; 66) über eine zusätzliche Abstützstrebe (22) mit dem Frontend (21) des Kraftfahrzeugs verhunden sind.

13. Sicherheitsstoßfänger nach einem der Ansprüche 1 bis 12, **dadurch gekennzeichnet, daß** der Aufprallsensor (6) von der Geschwindigkeit des Fahrzeugs abhängig auslöst, bevorzugt erst ab einer Geschwindigkeit von 8 km/h, insbesondere von 10 km/h.

## Claims

1. Safety bumper for a motor vehicle, in particular for a private vehicle, at least comprising a bumper basic body (4) plus bumper bar (5), which is connected by a mounting (11), in particular by an energy-absorbing module (11), to a cross-bar (10) of the vehicle, **characterized in that** above the mounting (11) energy-absorbing elements (9; 32, 33, 39, 41; 52, 60) and/or below the mounting (11) energy-absorbing elements (17, 20; 38, 46; 64) are provided, which are controllable by an impact sensor (6), and after actuation by the impact sensor (6) form above and/or below the bumper basic body (4) a continuous contour with the front side of the bumper basic body (4) so that, in the event of an impact-triggered actuation of the energy-absorbing elements, said energy-absorbing elements together with the front side of the bumper basic body (4) form a common front.

2. Safety bumper according to claim 1, **characterized in that** the energy-absorbing element disposed above the mounting (11) is an airbag (9), which is provided in a folded-up state, preferably under a flap (3), on or behind the mounting (11) and the igniter of which is electrically connected by the control line (12) to the impact sensor (6).

3. Safety bumper according to claim 1, **characterized in that** the energy-absorbing element disposed above the mounting (11) is an airbag (9), which is provided in a folded-up manner, preferably under a movable top flap (52), on or behind the mounting (11) and the igniter of which is electrically connected by the control line (12) to the impact sensor (6) and which together with the opened top flap (52, 68) after actuation by the impact sensor (6) forms a continuous contour with the front side of the bumper basic body (4).

4. Safety bumper according to claim 1, **characterized in that** the energy-absorbing element disposed above the mounting (11) is a combination of a top bumper flap (32), a sliding plate (33) situated under the latter and a lifting system (41) plus drive (39), wherein the drive (39) is electrically connected by the control line (12) to the impact sensor (6), and wherein after actuation of the drive (39) by the impact sensor (6) the extended top bumper flap (49) and the extended sliding plate (48) form a continuous contour with the front side of the bumper basic body (4).

5. Safety bumper according to one of claims 1 to 4, **characterized in that** the energy-absorbing element disposed below the mounting (11) is an airbag (64), which is provided in a folded-up state, preferably under the lowermost part (57) of the bumper, and the igniter of which is electrically connected by the control line (12) to the impact sensor (6).

6. Safety bumper according to claims 1 to 4, **characterized in that** energy-absorbing element disposed below the mounting (11) is an airbag (15), which is provided in a folded-up state, under a movable bottom flap (16), and the igniter of which is electrically connected by the control line (12) to the impact sensor (6) and which together with the opened flap (20) after actuation by the impact sensor (6) forms a continuous contour with the front side of the bumper basic body (4).

7. Safety bumper according to claims 1 to 4, **characterized in that** the energy-absorbing element disposed below the mounting (11) is a combination of the bumper basic body (4), a bottom sliding plate (38) situated under the latter and a bottom lifting system (46) plus drive (44), wherein the drive (44) is electrically connected by the control line (12) to the impact sensor (6), and wherein after actuation of the drive (44) by the impact sensor (6) the extended bottom sliding plate (38) forms a continuous contour with the bumper basic body (4).

8. Safety bumper according to claim 4 or 7, **characterized in that** the drive (44) or (39) for the bottom and/or top lifting system (41) and/or (46) is independently of one another a gas pressure cylinder or a hydraulic cylinder.

9. Safety bumper according to one of claims 2, 3, 4, 6, 7 or 8, **characterized in that** the flap (3), the top flap (52), the top bumper flap (32) or the bottom flap (16) are independently of one another movably connected by a flexible plastic part (2), made in particular of TPE or TPU, to the bumper basic body (4).

10. Safety bumper according to one of claims 1 to 9, **characterized in that** the mounting (11) is an energy-absorbing plastic foam body or plastic strut body.

11. Safety bumper according to claim 10, **characterized in that** the energy-absorbing plastic foam body is made of polyurethane foam or thermoplastic foam material, e.g. polystyrene foam or polypropylene foam.

12. Safety bumper according to one of claims 1 to 11, **characterized in that** the energy-absorbing elements (9; 32, 33, 39, 41; 52, 60) disposed above the mounting (11) and/or the energy-absorbing elements (17, 20; 38, 46; 66) below the mounting (11) are connected by an additional supporting strut (22) to the front end (21) of the motor vehicle.

13. Safety bumper according to one of claims 1 to 12, **characterized in that** the impact sensor (6) trips in dependence upon the speed of the vehicle, in a preferred manner only upwards of a speed of 8 km/h, in particular of 10 km/h.

## Revendications

1. Pare-chocs de sécurité pour un véhicule automobile, en particulier pour une voiture particulière, pourvu au moins d'un corps de base de pare-chocs (4) qui comprend une lame d'impact (5) et qui est relié par l'intermédiaire d'un support (11), en particulier par l'intermédiaire d'un module d'absorption d'énergie (11), avec une traverse (10) se trouvant sur le véhicule, **caractérisé en ce qu'**au-dessus du support (11) sont placés des éléments absorbant l'énergie (9 ; 32, 33, 39, 41 ; 52, 60) et/ou en dessous du support (11) sont placés des éléments absorbant l'énergie (17, 20 ; 38, 46 ; 64) qui peuvent être commandé par un capteur d'impact (6) et qui, après l'activation par le capteur d'impact (6), forment respectivement au-dessus ou en dessous du corps de base du pare-chocs (4) un contour continu avec le côté avant du corps de base de pare-chocs (4), de sorte que, lors d'un actionnement des éléments absorbant l'énergie déclenché par un impact, ceux-ci forment un front commun avec le côté avant du corps de base du pare-chocs (4).

2. Pare-chocs de sécurité selon la revendication 1, **caractérisé en ce que** l'élément absorbant l'énergie disposé au-dessus du support (11) est un coussin gonflable (9) qui, lorsqu'il est replié, est disposé de préférence sous une trappe (3) sur ou derrière le support (11) et dont l'élément d'amorçage fait l'objet d'une liaison électrique avec le capteur d'impact (6) par l'intermédiaire de la ligne de commande (12).

3. Pare-chocs de sécurité selon la revendication 1, **caractérisé en ce que** l'élément absorbant l'énergie disposé au-dessus du support (11) est un coussin gonflable (9) qui, lorsqu'il est replié, est disposé de préférence sous une trappe mobile supérieure (52) sur ou derrière le support (11), dont l'élément d'amorçage fait l'objet d'une liaison électrique avec le capteur d'impact (6) par l'intermédiaire de la ligne de commande (12) et qui, après l'activation par le capteur d'impact (6), forme en liaison avec la trappe supérieure ouverte (52, 68) un contour continu avec le côté avant du corps de base du pare-chocs (4).

4. Pare-chocs de sécurité selon la revendication 1, **caractérisé en ce que** l'élément absorbant l'énergie disposé au-dessus du support (11) est une combinaison d'une trappe supérieure de pare-chocs (32), d'une platine coulissante (33) se trouvant en dessous et d'un système .de levée (41) avec un mécanisme d'actionnement (39), le mécanisme d'actionnement (39) faisant l'objet d'une liaison électrique avec le capteur d'impact (6) par l'intermédiaire de la ligne de commande (12) et la trappe supérieure de pare-chocs sortie (49) ainsi que la platine coulissante sortie (48) formant, après l'activation du mécanisme d'actionnement (39) par le capteur d'impact (6), un contour continu avec le côté avant du corps de base du pare-chocs (4).

5. Pare-chocs de sécurité selon l'une quelconque des revendications 1 à 4, **caractérisé en ce que** l'élément absorbant l'énergie disposé en dessous du support (11) est un coussin gonflable (64) qui, lorsqu'il est replié, est disposé de préférence sous la partie la plus inférieure (57) du pare-chocs et dont l'élément d'amorçage fait l'objet d'une liaison électrique avec le capteur d'impact (6) par l'intermédiaire de la ligne de commande (12).

6. Pare-chocs de sécurité selon les revendications 1 à 4, **caractérisé en ce que** l'élément absorbant l'énergie disposé en dessous du support (11) est un coussin gonflable (15) qui, lorsqu'il est replié, est disposé sous une trappe inférieure mobile (16), dont l'élément d'amorçage fait l'objet d'une liaison électrique avec le capteur d'impact (6) par l'intermédiaire de la ligne de commande (12) et qui, après l'activation par le capteur d'impact (6), forme en liaison avec la trappe ouverte (20) un contour continu avec le côté avant du corps de base du pare-chocs (4).

7. Pare-chocs de sécurité selon les revendications 1 à 4, **caractérisé en ce que** l'élément absorbant l'énergie disposé en dessous du support (11) est une combinaison du corps de base du pare-chocs (4), d'une platine coulissante inférieure (38) se trouvant en dessous et d'un système de levée inférieur (46) avec un mécanisme d'actionnement (44), le mécanisme d'actionnement (44) faisant l'objet d'une liaison électrique avec le capteur d'impact (6) par l'intermédiaire de la ligne de commande (12) et la platine coulissante inférieure sortie (38) formant, après l'activation du mécanisme d'actionnement (44) par le capteur d'impact (6), un contour continu avec le corps de base du pare-chocs (4).

8. Pare-chocs de sécurité selon la revendication 4 ou 7, **caractérisé en ce que** mécanisme d'actionnement (44) ou (39) du système de levée inférieur (46) et/ou celui du système de levée supérieur (41) sont, indépendamment l'un de l'autre, en particulier un vérin de poussée à gaz ou un vérin hydraulique

9. Pare-chocs de sécurité selon l'une quelconque des revendications 2, 3, 4, 6, 7 ou 8, **caractérisé en ce que** la trappe (3), la trappe supérieure (52), la trappe supérieure de pare-chocs (32) ou la trappe inférieure (16) sont reliées de manière mobile et indépendamment l'une de l'autre avec le corps de base du pare-chocs (4) par l'intermédiaire d'une pièce souple en matériau synthétique (2), en particulier en élastomère thermoplastique (TPE) ou en polyuréthane thermoplastique (TPU).

10. Pare-chocs de sécurité selon l'une quelconque des revendications 1 à 9, **caractérisé en ce que** le support (11) est un corps en matériau synthétique alvéolaire ou un corps comprenant des entretoises en matériau synthétique qui absorbe l'énergie.

11. Pare-chocs de sécurité selon la revendication 10, **caractérisé en ce que** le corps en matériau synthétique alvéolaire absorbant l'énergie se compose de mousse de polyuréthane ou de matériau alvéolaire thermoplastique, par exemple de la mousse de polystyrène ou de la mousse de polypropylène.

12. Pare-chocs de sécurité selon l'une quelconque des revendications 1 à 11, **caractérisé en ce que** les éléments absorbant l'énergie (9 ; 32, 33, 39, 41 ; 52, 60) se trouvant au-dessus du support (11) et/ou les éléments absorbant l'énergie (17, 20 ; 38, 46 ; 66) se trouvant en dessous du support (11) sont reliés par l'intermédiaire d'une barre de soutien supplémentaire (22) avec l'extrémité frontale (21) du véhicule automobile.

13. Pare-chocs de sécurité selon l'une quelconque des revendications 1 à 12, **caractérisé en ce que** le déclenchement réalisé par le capteur d'impact (6) a lieu en fonction de la vitesse du véhicule, de préférence seulement à partir d'une vitesse de 8 km/h, en particulier de 10 km/h.
